# EUROPÄISCHE PATENTANMELDUNG

(11) **EP 2 942 222 A1**
(43) Veröffentlichungstag der Anmeldung: **11.11.2015**
(21) Anmeldenummer: 15157993.5
(22) Anmeldetag: 06.03.2015
(51) Int. Cl.: B60K 11/08, F02B 29/04, F01P 7/10

(54) **WÄRMETAUSCHERANORDNUNG FÜR EINE ANTRIEBSEINHEIT EINER LANDWIRTSCHAFTLICHEN ARBEITSMASCHINE**

(30) Priorität: 06.05.2014 DE 102014106253
(71) Anmelder: CLAAS Selbstfahrende Erntemaschinen GmbH, 33428 Harsewinkel (DE)
(72) Erfinder: Richard, Christian, 33428 Harsewinkel (DE)

(57) **Zusammenfassung**

Eine Wärmetauscheranordnung (1) für eine Antriebseinheit einer landwirtschaftlichen Arbeitsmaschine, insbesondere eines Traktors oder einer selbstfahrenden Erntemaschine, mit zumindest zwei unmittelbar nebeneinander angeordneten, parallel mit einem Kühlluftstrom (5) beaufschlagbaren Wärmetauschern (2, 3, 4) und mit zumindest einem Kühlluftgebläse (7) zur Erzeugung eines Kühlluftstroms (5), zeichnet sich dadurch aus, dass bezogen auf die Richtung des Kühlluftstromes (5) vor oder hinter jedem der Wärmetauscher (2, 3, 4) jeweils ein verstellbares, den Kühlluftstrom (5) beeinflussendes Luftleitelement (10, 11, 12) angeordnet ist.

## Beschreibung

Die Erfindung betrifft eine Wärmetauscheranordnung für eine Antriebseinheit einer landwirtschaftlichen Arbeitsmaschine, insbesondere eines Traktors oder einer selbstfahrenden Erntemaschine, mit zumindest zwei unmittelbar nebeneinander angeordneten, parallel mit einem Kühlluftstrom beaufschlagbaren Wärmetauschern und mit zumindest einem Kühlluftgebläse zur Erzeugung eines Kühlluftstroms.

Bei entsprechenden Antriebseinheiten, die mit einer Wärmetauscheranordnung versehen sind, handelt es sich insbesondere um eine Brennkraftmaschine, wobei die Wärmetauscher beispielsweise zur Kühlung des Kühlwassers oder der Ladeluft vorgesehen sind. Weiterhin können Bestandteile entsprechender Antriebseinheiten ein mechanisches oder hydromechanisches Getriebe und/oder ein hydrostatisches Antriebssystem und/oder eine Arbeitshydraulik sein. In diesen Fällen erfolgt beispielsweise eine Kühlung des Getriebe- oder Hydrauliköls. Außerdem kann Bestandteil der Wärmetauscheranordnung ein Wärmetauscher einer Klimaanlage sein.

Landwirtschaftliche Arbeitsmaschinen wie Traktoren, selbstfahrende Erntemaschine insbesondere Mähdrescher, Feldhäcksler und dergleichen sind in der Regel mit einem komplexen Kühlsystem ausgestattet, da an Bord einer landwirtschaftlichen Arbeitsmaschine üblicherweise zugleich verschiedene Betriebs- und Hilfsmittel (z.B. Motorkühlflüssigkeit, Ladeluft, Getriebeöl, Hydrauliköl) zu kühlen sind.

Daneben besteht bei diesen Arbeitsmaschinen überhaupt ein hoher Leistungsbedarf, so dass immer größere Kühlleistungen erforderlich werden. Dem Erfordernis nach großer Kühlleistung steht die hohe Wärmeabgabe leistungsstarker Motoren entgegen, welche es schwierig macht, auf dem begrenzten Bauraum eine ausreichende Zufuhr kühler Außenluft zum Wärmetauscher zu gewährleisten.

Eine naheliegende Lösung besteht darin, ein Kühlluftgebläse, das die verschiedenen Wärmetauscher mit einem Kühlluftstrom beaufschlagt, mit höherer Leistung zu betreiben, um die erforderliche Kühlung zu bewirken.

Wie zuvor erwähnt, handelt es sich bei den Kühlaggregaten landwirtschaftlicher Arbeitsmaschinen um kombinierte Kühler, d.h. es werden zugleich mehrere Medien gekühlt. Demnach wird vom Kühlluftstrom eines einzigen Kühlluftgebläses eine Mehrzahl von Wärmetauschern beaufschlagt, die zu diesem Zweck beispielsweise neben-oder hintereinander angeordnet sind. Verwiesen sei in diesem Zusammenhang beispielhaft auf WO 2008/080305 A1.

Um Überhitzungen einzelner Komponenten sicher zu vermeiden, ist es erforderlich und üblich, das Kühlluftgebläse stets so einzustellen, dass der Wärmetauscher mit der höchsten Temperatur - bzw. der Lüfter mit dem größten Kühlbedarf - die Lüfterdrehzahl steuert. Dies hat jedoch zur Folge, dass die übrigen Wärmetauscher möglicherweise in einem stärkeren Maße als für diese - in einer bestimmten Betriebssituation - jeweils erforderlich gekühlt werden. Es wird somit eine unnötig hohe Antriebsleistung für das Kühlluftgebläse aufgebracht.

Vor diesem Hintergrund liegt der vorliegenden Erfindung die Aufgabe zugrunde, eine Wärmetauscheranordnung der genannten Art anzugeben, die bei bedarfsgerechter Kühlung der Wärmetauscher einen verringerten Leistungsbedarf aufweist.

Die Aufgabe wird gelöst durch eine Wärmetauscheranordnung gemäß den Merkmalen des Anspruchs 1. Diese zeichnet sich dadurch aus, dass bezogen auf die Richtung des Kühlluftstromes vor oder hinter jedem der Wärmetauscher jeweils ein verstellbares, den Kühlluftstrom beeinflussendes Luftleitelement angeordnet ist.

An einer landwirtschaftlichen Arbeitsmaschine, die zum Teil unter extremen Betriebsbedingung und mit hoher Leistung betrieben wird, sind für unterschiedliche Aggregate und deren Teile Wärmetauscher vorzusehen. Dabei kann es sich neben dem üblichen Kühlwasserkühler und einem Ladeluftkühler der Brennkraftmaschine um Kühler für eine Arbeitshydraulik, für einen hydrostatischen oder hydrodynamischen Antrieb sowie für ein Getriebe und gegebenenfalls einen Wärmetauscher für eine Klimaanlage handeln.

Die entsprechenden Wärmetauscher oder Kühler sind in vorteilhafter Weise zu einem Block zusammengefasst, also vorzugsweise in einem Rahmen angeordnet. Durch die Steuerung des Luftmassenstroms an jedem der Wärmetauscher mittels der diesen vor-oder nachgeordneten Luftleitelemente lässt sich der Luftmassenstrom variabel, insbesondere bedarfsgerecht und individuell, auf die Wärmetauscher aufteilen. Die Luftleitelemente des Wärmetauschers mit dem höchsten Kühlbedarf können so beispielsweise auf einen Öffnungsquerschnitt eingestellt werden, der für diesen einen hohen Luftmassenstrom ermöglicht, während an Wärmetauschern mit verhältnismäßig geringem Kühlbedarf das zugehörige Luftleitelement auf einen geringen Öffnungsquerschnitt eingestellt wird. So steigt die Strömungsgeschwindigkeit am wärmsten Wärmetauscher - bei gleicher Drehzahl des Kühlluftgebläses - weiter an. Durch diese Möglichkeit der Verstellung weist die Wärmetauscheranordnung eine erhöhte Energieeffizienz auf.

In weiterer Ausgestaltung der erfindungsgemäßen Lösung soll ein Strömungsquerschnitt der Luftleitelemente stufenlos verstellbar sein. Damit kann an jedem der Wärmetauscher der entsprechende Kühlluftbedarf ermittelt werden, der als Parameter für die Luftzuteilung dient und eine Veränderung des Strömungsquerschnitts bewirkt. In vorteilhafter Weise erfolgt dabei die Verstellung stufenlos. Alternativ dazu kann aber auch eine Verstellung der Luftleitelemente in mehreren Stufen erfolgen.

Weiterhin ist vorgesehen, dass die Luftleitelemente der einzelnen Wärmetauscher getrennt voneinander verstellbar sind. Dadurch kann der Luftmassenstrom mehrerer Wärmetauscher reduziert und zusätzlich einem Wärmetauscher zugeführt werden, so dass an diesem die Strömungsgeschwindigkeit steigt und somit die Wärme in erforderlichem Maße abgeführt werden kann. Die Luftleitelemente sind vorzugsweise als Lamellen ausgebildet, wobei diese jeweils eine Schwenkbewegung zwischen einem maximalen Öffnungsgrad und einer Schließstellung ausführen können. Darüber hinaus besteht die Möglichkeit, die Luftleitelemente als Schieber auszubilden, wozu ein festes Gitter und ein dazu verschiebbares Schiebegitter vorgesehen sind.

Grundsätzlich unabhängig von der jeweils gewählten Bauform der Luftleitelemente sind gemäß einer vorteilhaften Weiterbildung die einzelnen Luftleitelemente abhängig vom Kühlluftbedarf des jeweils zugehörigen Wärmetauschers einstellbar.

Außerdem ist vorteilhaft vorgesehen, dass die Luftleitelemente jeweils mit einem Verstellmotor versehene bevorzugt elektrische Verstelleinrichtungen aufweisen. Dabei wird der Kühlluftbedarf des jeweiligen Wärmetauschers über einen Temperatursensor ermittelt und ein entsprechender Istwert an eine Regeleirichtung übertragen, die aufgrund dieses Istwertes den Verstellmotor des betreffenden Wärmetauschers ansteuert, um dessen Luftmassenstrom getrennt zu den Luftmassenströmen der übrigen Wärmetauscher, die ebenfalls mit Verstellmotoren versehen sind, einzustellen.

Weiterhin soll den Wärmetauschern ein gemeinsames Kühlluftgebläse zugeordnet sein. Dieses kann in Übereinstimmung mit der zuvor angegebenen Anordnung der Luftleitelemente, in Richtung des Kühlluftstromes gesehen, hinter oder vor den Wärmetauschern angeordnet sein. Alternativ dazu besteht die Möglichkeit, mehrere Kühlluftgebläse vorzusehen, die jeweils einem oder mehreren Wärmetauschern zugeordnet sind. In beiden Fällen werden die Kühlluftgebläse bedarfsabhängig gesteuert, d.h., sie werden zu- oder abgeschaltet und/oder bezüglich ihrer Drehzahl geregelt.

In weiterer Ausgestaltung der Erfindung ist vorgesehen, dass eine Verstelleinrichtung der Luftleitelemente und eine Verstellung zumindest eines Antriebs des zumindest einen Kühlluftgebläses mit einer Regeleinrichtung verbunden sind, die eine Drehzahl des zumindest einen Kühlluftgebläses in Abhängigkeit vom gesamten Kühlluftbedarf und die jeweilige Stellung der Luftleitelemente in Abhängigkeit vom Kühlluftbedarf des diesen zugeordneten Wärmetauschers einstellt. Somit werden bei einem großen Kühlluftbedarf an allen Wärmetauschern die Luftleitelemente auf ihren größten Strömungsquerschnitt eingestellt sein. Besteht dabei an einzelnen Wärmetauschern ein geringerer Kühlluftbedarf, so wird an diesen mittels der Luftleitelemente der Strömungsquerschnitt gedrosselt. Gleichzeitig kann auch die Lüfterdrehzahl abgesenkt werden. Dadurch lässt sich die insgesamt auf den zumindest einen Lüfterantrieb übertragene Antriebsleistung reduzieren. Folglich wird die Wärmetauscheranordnung mit größerer Energieeffizienz betrieben.

Vorteilhaft ist vorgesehen, dass die Regeleinrichtung betreibbar ist, einen Strömungsquerschnitt desjenigen Luftleitelements auf einen maximalen Wert zu erhöhen, dessen zugehöriger Wärmetauscher den höchsten Kühlluftbedarf aufweist.

Daneben kann vorgesehen sein, dass die Regeleinrichtung betreibbar ist, einen Strömungsquerschnitt eines Luftleitelements auf einen untermaximalen Wert (d.h. unterhalb des maximalen liegenden Wert) zu verringern, wenn der diesem Luftleitelement zugehörige Wärmetauscher einen geringeren als durch den Kühlluftstrom bewirkbaren Kühlluftbedarf aufweist.

Schließlich sollen die einzelnen zu einem Block zusammengefassten Wärmetauscher zur Kühlung des Kühlwassers einer Brennkraftmaschine und/oder zur Kühlung einer von einem Abgasturbolader verdichteten Ladeluft der Brennkraftmaschine und/oder zur Kühlung des Motoröls der Brennkraftmaschine und/oder zur Kühlung eines Getriebeöls und/oder zur Kühlung eines Hydrauliköls vorgesehen sein.

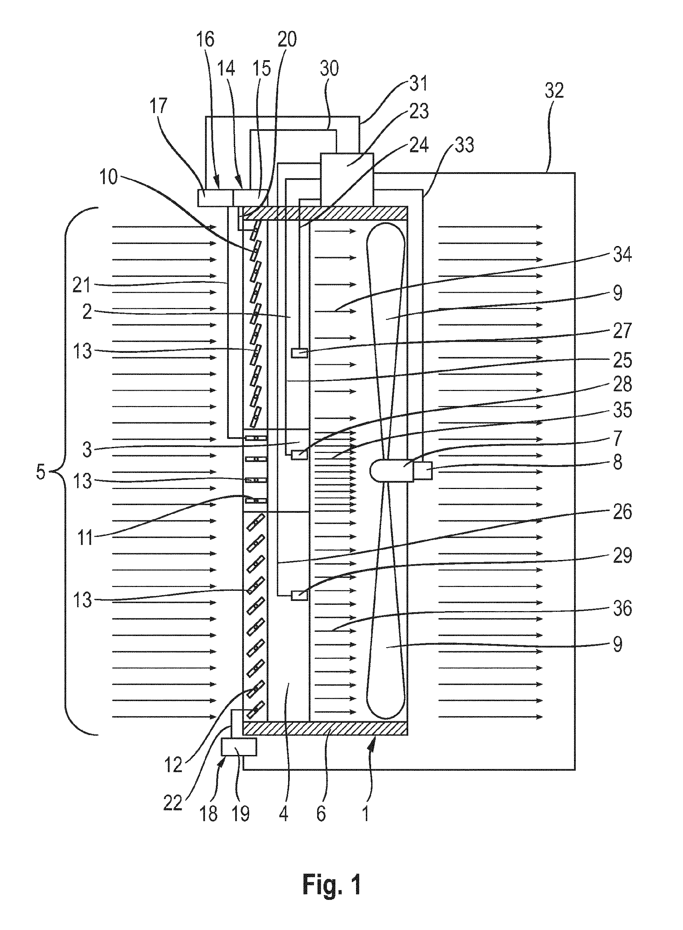

Die Erfindung ist nicht auf die angegebene Kombination der Merkmale des unabhängigen Patentanspruchs 1 und der von diesem abhängigen Patentansprüche beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Darin zeigt die einzige
- Fig.: eine schematische Darstellung einer aus drei Wärmetauschern bestehenden Wärmetauscheranordnung.

In der Fig. ist mit 1 eine Wärmetauscheranordnung bezeichnet, die drei Wärmetauscher 2, 3 und 4 aufweist, welche nebeneinander angeordnet sind und somit parallel zueinander von einem Kühlluftstrom 5 beaufschlagt werden. Dabei sind die Wärmetauscher 2, 3 und 4 von einem rahmenartigen Gestell 6 umschlossen, das in einem nicht näher dargestellten Rahmen oder Block einer in der Figur ebenfalls nicht gezeigten land- oder bauwirtschaftlich nutzbaren Arbeitsmaschine befestigbar ist.

Der Wärmetauscheranordnung 1 und somit allen Wärmetauschern 2, 3 und 4 ist ein als Sauggebläse wirkendes Kühlluftgebläse 7 zugeordnet, das - in Strömungsrichtung des zuvor genannten Kühlluftstroms 5 - hinter der Wärmetauscheranordnung 1 angeordnet ist und diesen somit durch die Wärmetauscher 2, 3 und 4 fördert. Das Kühlluftgebläse 7 wird dabei über einen elektrischen Lüftermotor 8 angetrieben und weist Lüfterflügel 9 auf. Alternativ zu einem elektrischen Lüftermotor kann bedarfsweise auch ein hydraulischer Lüftermotor 8 zum Einsatz kommen. An Stelle des am Kühlluftgebläse 7 angeordneten Lüftermotors 8 kann auch ein Riementrieb vorgesehen sein, mittels dessen das Kühlluftgebläse 7 von einer in ihrer Ausgangsdrehzahl regelbaren Kupplung angetrieben wird.

Weiterhin sind Bestandteil der Wärmetauscheranordnung 1 Luftleitelemente 10, 11, und 12. Dabei ist das Luftleitelement 10 vor dem Wärmetauscher 2, das Luftleitelement 11 vor dem Wärmetauscher 3 und das Luftleitelement 12 vor dem Wärmetauscher 4 angeordnet. Die Luftleitelemente 10, 11 und 12 weisen jeweils zwischen einer geöffneten Stellung und einer geschlossenen Stellung verschwenkbare Lamellen 13 auf, die im Wesentlichen identisch ausgebildet sein können. Ein Strömungsquerschnitt der Luftleitelemente 10, 11, 12 lässt sich abhängig von deren Stellung stufenlos verstellen. Diese Verstellung der Luftleitelemente 10, 11 und 12 erfolgt getrennt voneinander, wozu dem Luftleitelement 10 eine Verstelleinrichtung 14 mit einem Verstellmotor 15, dem Luftleitelement 11 eine Verstelleinrichtung 16 mit einem Verstellmotor 17 und dem Luftleitelement 13 eine Verstelleinrichtung 18 mit einem Verstellmotor 19 zugeordnet sind. Von den Verstellmotoren 15, 17 und 19, die eine lineare Stellbewegung ausführen, gehen Gestänge 20, 21 und 22 aus, die an den jeweiligen Lamellen 13 der Luftleitelemente 10, 11 und 12 angreifen und diese, wie angegeben, verschwenken. Alternativ oder ergänzend zu den in der Fig. abgebildeten verstellbaren Luftleitelementen könnten diese als feststehendes Gitter und ein dazu verschiebbares Schiebegitter ausgebildet sein.

Wie weiterhin aus der Figur hervorgeht, weist die Wärmetauscheranordnung 1 eine Regeleinrichtung 23 auf, die über Signalleitungen 24, 25 und 26 mit Temperatursensoren 27, 28 und 29 verbunden ist. Diese Temperatursensoren 27, 28 und 29 sind jeweils zur Erfassung der Temperaturen der Wärmetauscher 2, 3 und 4 vorgesehen. Außerdem gehen von der Regeleinrichtung 23 Geberleitungen 30, 31, 32 und 33 aus, die an die Verstellmotoren 15, 17 und 19 sowie an den Lüftermotor 8 angeschlossen sind. Folglich werden von der Regeleinrichtung 23 in Abhängigkeit von den Temperaturen der Wärmetauscher 2, 3 und 4 deren Luftleitelemente 10, 11 und 12 einzeln verstellt. Auch die Lüfterdrehzahl des Kühlluftgebläses 7 wird durch die Regeleinrichtung 23 vorgegeben. Dabei gibt vorteilhaft die Regeleinrichtung 23 eine Drehzahl des Kühlluftgebläses 7 in Abhängigkeit vom gesamten Kühlluftbedarf vor und die Regeleinrichtung 23 stellt eine jeweilige Stellung der Luftleitelemente 10, 11, 12 in Abhängigkeit vom Kühlluftbedarf des diesen zugeordneten Wärmetauschers 2, 3, 4 ein.

Die Regeleinrichtung 23 ist vorteilhaft betreibbar, einen Strömungsquerschnitt desjenigen Luftleitelements 10, 11, 12 auf einen maximalen Wert zu erhöhen, dessen zugehöriger Wärmetauscher 2, 3, 4 den höchsten Kühlluftbedarf aufweist. Daneben ist die Regeleinrichtung betreibbar, einen Strömungsquerschnitt eines Luftleitelements 10, 11, 12 auf einen untermaximalen Wert zu verringern, wenn der diesem Luftleitelement 10, 11, 12 zugehörige Wärmetauscher 2, 3, 4 einen geringeren als durch den Kühlluftstrom 5 bewirkbaren Kühlluftbedarf aufweist.

Wie der Darstellung entnommen werden kann, ist im vorliegenden Fall aufgrund der unterschiedlichen an den Wärmetauschern 2, 3 und 4 ermittelten Temperaturen das Luftleitelement 10 des Wärmetauschers 2 nahezu geschlossen, das Luftleitelement 11 des Wärmetauschers 3 völlig geöffnet und das Luftleitelement 12 des Wärmetauschers 4 etwa halb geöffnet. Die austrittsseitig der Wärmetauscheranordnung 1 dargestellten Gruppen von Pfeilen 34, 35 und 36 verdeutlichen, mit welcher Strömungsgeschwindigkeit und somit mit welchem Luftmassenstrom die einzelnen Wärmetauscher 2, 3 und 4 beaufschlagt werden. Übergeordnet zu den einzelnen Luftmassenströmen wird der gesamte Luftmassenstrom durch die zuvor erläuterte Verstellung des Lüftermotors 8 ei ngestel It.

Damit kann den einzelnen Wärmetauschern 2, 3 und 4 auch bei begrenztem Bauraum die jeweils erforderliche Kühlleistung zur Verfügung gestellt werden. Weiterhin weist die erfindungsgemäße Wärmetauscheranordnung den Vorteil auf, dass die vom Kühlluftgebläse 7 aufgenommene Leistung insgesamt reduziert werden kann. Die bedarfsabhängige Verstellung der Luftleitelemente 10, 11 und 12 kann außerdem eingesetzt werden, um in einzelnen Wärmetauschern 2, 3 und 4 für das entsprechende Medium eine erforderliche Betriebstemperatur zu erreichen.

Abschließend sei allgemein angemerkt, dass die einzelnen zu einem Block zusammengefassten Wärmetauscher 2, 3, 4 zur Kühlung des Kühlwassers einer Brennkraftmaschine und/oder zur Kühlung einer von einem Abgasturbolader verdichteten Ladeluft einer Brennkraftmaschine und/oder zur Kühlung des Motoröls einer Brennkraftmaschine und/oder zur Kühlung eines Getriebeöls und/oder zur Kühlung eines Hydrauliköls vorgesehen sein können.

### Bezugszeichen

1 Wärmetauscheranordnung
2 Wärmetauscher
3 Wärmetauscher
4 Wärmetauscher
5 Kühlluftstrom gesamt
6 rahmenartiges Gestell
7 Kühlluftgebläse
8 Lüftermotor
9 Lüfterflügel
10 Luftleitelement
11 Luftleitelement
12 Luftleitelement
13 Lamellen
14 Verstelleinrichtung
15 Verstellmotor
16 Verstelleinrichtung
17 Verstellmotor
18 Verstelleinrichtung
19 Verstellmotor
20 Gestänge von 10
21 Gestänge von 11
22 Gestänge von 12
23 Regeleinrichtung
24 Signalleitung
25 Signalleitung
26 Signalleitung
27 Temperatursensor von 2
28 Temperatursensor von 3
29 Temperatursensor von 4
30 Geberleitung für 14
31 Geberleitung für 16
32 Geberleitung für 18
33 Geberleitung für 8
34 Luftmassenstrom von 2
35 Luftmassenstrom von 3
36 Luftmassenstrom von 4

## Patentansprüche

1. Wärmetauscheranordnung (1) für eine Antriebseinheit einer landwirtschaftlichen Arbeitsmaschine, insbesondere eines Traktors oder einer selbstfahrenden Erntemaschine, mit zumindest zwei unmittelbar nebeneinander angeordneten, parallel mit einem Kühlluftstrom (5) beaufschlagbaren Wärmetauschern (2, 3, 4) und mit zumindest einem Kühlluftgebläse (7) zur Erzeugung eines Kühlluftstroms (5),
**dadurch gekennzeichnet, dass** bezogen auf die Richtung des Kühlluftstromes (5) vor oder hinter jedem der Wärmetauscher (2, 3, 4) jeweils ein verstellbares, den Kühlluftstrom (5) beeinflussendes Luftleitelement (10, 11, 12) angeordnet ist.

2. Wärmetauscheranordnung nach Patentanspruch 1, **dadurch gekennzeichnet, dass** ein Strömungsquerschnitt der Luftleitelemente (10, 11, 12) stufenlos verstellbar ist.

3. Wärmetauscheranordnung nach Patentanspruch 1 oder 2, **dadurch gekennzeichnet, dass** die Luftleitelemente (10, 11, 12) der einzelnen Wärmetauscher (2, 3, 4) getrennt voneinander verstellbar sind.

4. Wärmetauscheranordnung nach einem der vorigen Patentansprüche, **dadurch gekennzeichnet, dass** die Luftleitelemente (10, 11, 12) als Lamellen (13) ausgebildet sind.

5. Wärmetauscheranordnung nach einem der Patentansprüche 1 bis 3, **dadurch gekennzeichnet, dass** die Luftleitelemente als ein feststehendes Gitter und ein dazu verschiebbares Schiebegitter ausgebildet sind.

6. Wärmetauscheranordnung nach einem der vorigen Patentansprüche, **dadurch gekennzeichnet, dass** die einzelnen Luftleitelemente (10, 11, 12) abhängig vom Kühlluftbedarf des jeweils zugehörigen Wärmetauschers (2, 3, 4) einstellbar sind.

7. Wärmetauscheranordnung nach einem der vorigen Patentansprüche, **dadurch gekennzeichnet, dass** die Luftleitelemente (10, 11, 12) jeweils mit einem Verstellmotor (15, 17, 19) versehene elektrische Verstelleinrichtungen (14, 16, 18) aufweisen.

8. Wärmetauscheranordnung nach einem der vorigen Patentansprüche, **dadurch gekennzeichnet, dass** den Wärmetauschern (2, 3, 4) ein gemeinsames Kühlluftgebläse (7) zugeordnet ist, welches in Richtung des Kühlluftstromes (5) hinter den Wärmetauschern (2, 3, 4) angeordnet ist.

9. Wärmetauscheranordnung nach einem der Patentansprüche 1 bis 7, **dadurch gekennzeichnet, dass** den Wärmetauschern (2, 3, 4) ein gemeinsames Kühlluftgebläse (7) zugeordnet ist, welches in Richtung des Kühlluftstromes vor den Wärmetauschern (2, 3, 4) angeordnet ist.

10. Wärmetauscheranordnung nach einem der vorigen Patentansprüche, **dadurch gekennzeichnet, dass** eine Verstelleinrichtung (14, 16, 18) der Luftleitelemente (10, 11, 12) und ein Lüfterantrieb (8) des Kühlluftgebläses (7) mit einer Regeleinrichtung (23) verbunden sind, die eine Drehzahl des Kühlluftgebläses (7) in Abhängigkeit vom gesamten Kühlluftbedarf und die jeweilige Stellung der Luftleitelemente (10, 11, 12) in Abhängigkeit vom Kühlluftbedarf des diesen zugeordneten Wärmetauschers (2, 3, 4) einstellt.

11. Wärmetauscheranordnung nach einem der vorigen Patentansprüche, **dadurch gekennzeichnet, dass** die Regeleinrichtung (23) betreibbar ist, einen Strömungsquerschnitt desjenigen Luftleitelements (10, 11, 12) auf einen maximalen Wert zu erhöhen, dessen zugehöriger Wärmetauscher (2, 3, 4) den höchsten Kühlluftbedarf aufweist.

12. Wärmetauscheranordnung nach einem der vorigen Patentansprüche, **dadurch gekennzeichnet, dass** die Regeleinrichtung (23) betreibbar ist, einen Strömungsquerschnitt eines Luftleitelements (10, 11, 12) auf einen untermaximalen Wert zu verringern, wenn der diesem Luftleitelement (10, 11, 12) zugehörige Wärmetauscher (2, 3, 4) einen geringeren als durch den Kühlluftstrom (5) bewirkbaren Kühlluftbedarf aufweist.

13. Wärmetauscheranordnung nach einem der vorigen Patentansprüche, **dadurch gekennzeichnet, dass** die einzelnen zu einem Block zusammengefassten Wärmetauscher (2, 3, 4) zur Kühlung des Kühlwassers einer Brennkraftmaschine und/oder zur Kühlung einer von einem Abgasturbolader verdichteten Ladeluft einer Brennkraftmaschine und/oder zur Kühlung des Motoröls einer Brennkraftmaschine und/oder zur Kühlung eines Getriebeöls und/oder zur Kühlung eines Hydrauliköls vorgesehen sind.
